(19) Europäisches Patentamt
European Patent Office
Office européen des brevets

(11) EP 0 952 996 B1

# (12) EUROPEAN PATENT SPECIFICATION

(45) Date of publication and mention of the grant of the patent:
**06.10.2004 Bulletin 2004/41**

(21) Application number: **98902475.7**

(22) Date of filing: **08.01.1998**

(51) Int Cl.$^7$: **C08F 10/00**, C08F 4/602

(86) International application number:
**PCT/US1998/000482**

(87) International publication number:
**WO 1998/030608 (16.07.1998 Gazette 1998/28)**

## (54) METHOD OF CONTROLLING OLEFIN POLYMERIZATION CATALYST COMPOSITION ACTIVITY

VERFAHREN ZUR KONTROLLE DER AKTIVITÄT EINER OLEFINPOLYMERISATIONKATALYSATORZUSAMMENSETZUNG

PROCEDE DE REGULATION DE L'ACTIVITE D'UNE COMPOSITION CATALYSEUR DESTINEE A LA POLYMERISATION DES OLEFINES

(84) Designated Contracting States:
**DE ES FR GB IT NL SE**

(30) Priority: **10.01.1997 US 782499**

(43) Date of publication of application:
**03.11.1999 Bulletin 1999/44**

(73) Proprietor: **UNION CARBIDE CHEMICALS & PLASTICS TECHNOLOGY CORPORATION**
**Danbury, Connecticut 06817-0001 (US)**

(72) Inventors:
- **PETERSON, Thomas, Henry**
  **Charleston, WV 25314 (US)**
- **SCHRECK, David, James**
  **Cross Lanes, WV 25313 (US)**
- **WENZEL, Timothy, Todd**
  **Charleston, WV 25302 (US)**
- **WILLIAMS, Clark, Curtis**
  **Charleston, WV 25314 (US)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
**EP-A- 0 741 146**
**WO-A-91/03500**
**US-A- 5 527 752**

- **PATENT ABSTRACTS OF JAPAN vol. 097, no. 003, 31 March 1997 & JP 08 301916 A (IDEMITSU PETROCHEM CO LTD), 19 November 1996,**
- **PATENT ABSTRACTS OF JAPAN vol. 097, no. 001, 31 January 1997 & JP 08 245714 A (MITSUI PETROCHEM IND LTD), 24 September 1996,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 952 996 B1

## Description

The present invention provides a method for controlling the olefin polymerization activity of an unsupported, liquid form catalyst composition prepared by contacting a single site catalyst precursor with an activating cocatalyst outside of a polymerization reactor.

## BACKGROUND

A variety of catalyst compositions containing single site catalyst precursors have been shown to be highly useful in the preparation of polyolefins, producing relatively homogeneous copolymers at good polymerization rates and allowing one to tailor closely the final properties of the polymer produced. In contrast to traditional Ziegler-Natta catalyst precursors, single site catalyst precursors are catalytic compounds in which each catalyst molecule contains one or only a few polymerization sites. Metallocenes are the most well known type of single site catalyst precursor, and are organometallic coordination complexes containing one or more pi-bonded moieties (i.e., cycloalkadienyl groups) in association with a metal atom from Groups IIIB to VIII or the Lanthanide series of the Periodic Table of Elements.

U.S. Patent No. 5,317,036 to Brady, III, et al. relates to the use of unsupported, liquid form catalyst compositions, including those based on metallocenes. It discloses the gas phase polymerization of one or more monomers having 2 to 12 carbon atoms by: a) continuously introducing a gaseous stream comprising the monomers into a reaction zone; b) introducing a polymerization catalyst composition in liquid form into the reaction zone, and c) withdrawing polymeric product from the reaction zone. The liquid form catalyst composition comprises a catalyst precursor such as a metallocene and, if required, a cocatalyst that are liquids in their neat form or dissolved or dispersed in a suitable solvent.

Unsupported, liquid form catalyst compositions have a number of practical benefits. Unsupported catalyst compositions avoid the costs associated with support material and its preparation, and the provide for the realization of a very high catalyst surface area to volume ratio. Furthermore, unsupported catalyst compositions produce polymers having a much lower residual ash content than polymers produced using supported catalyst compositions.

Although unsupported, liquid form catalyst compositions containing single site catalyst precursors have good activity, it is often necessary to adjust their activities to suit polymerization process conditions. To this end, applicants have discovered that the activity of an unsupported, liquid form catalyst composition prepared by contacting a single site catalyst precursor with an activating cocatalyst outside of a polymerization reactor may be adjusted by varying one or more of: a) the period of time the single site catalyst precursor and the activating cocatalyst are contacted; b) the concentrations of the single site catalyst precursor and the activating cocatalyst during contacting; c) the mole ratio of the single site catalyst precursor to the activating cocatalyst during contacting; d) the temperature during contacting; and e) the degree of mixing of the single site catalyst precursor and the activating cocatalyst.

## SUMMARY OF THE INVENTION

The invention provides a method of controlling the olefin polymerization activity of an unsupported, liquid form catalyst composition such that the activity of said catalyst composition is changed by at least 20% up or down, the catalyst being prepared by contacting a single site catalyst precursor with an activating cocatalyst outside of a polymerization reactor for a period of time at concentrations, a mole ratio, and a temperature, which method comprising simultaneously performing two or more of changing:

a) the period of time contacting the single site catalyst precursor and the activating cocatalyst by at least 50%;
b) the concentrations of the single site catalyst precursor and the activating cocatalyst by at least 30% during contacting;
c) the mole ratio of the activating cocatalyst to the single site catalyst precursor by at least 20% during contacting; and
d) the temperature by 2-10°C during contacting.

The invention also provides a process for the production of an olefin polymer, which comprises:

(i) preparing an unsupported liquid form catalyst composition by contacting a single site catalyst precursor with an activating cocatalyst outside of a polymerization reactor for a period of time at concentrations, a mole ratio, and a temperature, wherein the activity of the catalyst composition is changed by at least 20% up or down by simultaneously performing two or more of changing:

a) the period of time of contacting the single site catalyst precursor and the activating cocatalyst by at least 50%;
b) the concentrations of the single site catalyst precursor and the activating cocatalyst by at least 30% during contacting;
c) the mole ratio of the single site catalyst precursor to the activating cocatalyst by at least 20% during contacting; and
d) the temperature by 2-10°C during contacting, and

(ii) contacting at least one olefin monomer under polymerisation condition with said unsupported liquid form catalyst composition.

The invention is applicable to the polymerization of olefins by any polymerization mode that employs a solution catalyst. A variety of suspension, solution, slurry, and gas phase processes are known in the art, and the invention is not limited to any specific type of polymerization system. Generally, olefin polymerization temperatures range from 0°C to 200°C at atmospheric, subatmospheric, or superatmospheric pressures. Slurry or solution polymerization systems may utilize subatmospheric or superatmospheric pressures and temperatures in the range of 40°C to 110°C. A useful liquid phase polymerization system is described in U.S. Patent 3,324,095. Liquid phase polymerization systems generally comprise a reactor to which olefin monomer and catalyst composition are added, and which contains a liquid reaction medium for dissolving or suspending the polyolefin. The liquid reaction medium may consist of the bulk liquid monomer or an inert liquid hydrocarbon that is nonreactive under the polymerization conditions employed. Although such an inert liquid hydrocarbon need not function as a solvent for the catalyst composition or the polymer obtained by the process, it usually serves as solvent for the monomers employed in the polymerization. Among the inert liquid hydrocarbons suitable for this purpose are isopentane, hexane, cyclohexane, heptane, benzene and toluene. Reactive contact between the olefin monomer and the catalyst composition should be maintained by constant stirring or agitation. The reaction medium containing the olefin polymer product and unreacted olefin monomer is withdrawn from the reactor continuously. The olefin polymer product is separated, and the unreacted olefin monomer and liquid reaction medium are recycled into the reactor.

The invention is, however, especially useful with gas phase polymerization systems, with superatmospheric pressures in the range of 0.007 to 7 MPa (1 to 1000 psi), preferably 0.35 to 2.8 MPa (50 to 400 psi) most preferably 0.7 to 2.1 MPa (100 to 300 psi), and temperatures in the range of 30 to 130°C, preferably 65 to 110°C. Stirred or fluidized bed gas phase polymerization systems are particularly useful. Generally, a conventional gas phase, fluidized bed process is conducted by passing a stream containing one or more olefin monomers continuously through a fluidized bed reactor under reaction conditions and in the presence of the catalyst composition at a velocity sufficient to maintain a bed of solid particles in a suspended condition. A stream containing unreacted monomer is withdrawn from the reactor continuously, compressed, cooled, optionally partially or fully condensed, and recycled into the reactor. Product is withdrawn from the reactor and make-up monomer is added to the recycle stream. As desired for temperature control of the polymerization system, any gas inert to the catalyst composition and reactants may also be present in the gas stream. In addition, a fluidization aid such as carbon black, silica, clay, or talc may be used, as disclosed in U.S. Patent No. 4,994,534.

The polymerization system may comprise a single reactor or in two or more reactors in series, and is conducted substantially in the absence of catalyst poisons. Organometallic compounds may be employed as scavenging agents for poisons to increase the catalyst activity. Examples of scavenging agents are metal alkyls, preferably aluminum alkyls, most preferably triisobutylaluminum.

Conventional adjuvants may be used in the process, provided they do not interfere with the operation of the catalyst composition in forming the desired polyolefin. Hydrogen may be used as a chain transfer agent in the process, in amounts up to 10 moles of hydrogen per mole of total monomer feed.

Polyolefins that may be produced according to the invention include, but are not limited to, those made from olefin monomers such as ethylene and linear or branched higher alpha-olefin monomers containing 3 to 20 carbon atoms. Homopolymers or interpolymers of ethylene and such higher alpha-olefin monomers, with densities ranging from 0.86 to 0.95 may be made. Suitable higher alpha-olefin monomers include, for example, propylene, 1-butene, 1-pentene, 1-hexene, 4-methyl-1-pentene, 1-octene, and 3,5,5-trimethyl-1-hexene. Olefin polymers according to the invention may also be based on or contain conjugated or nonconjugated dienes, such as linear, branched, or cyclic hydrocarbon dienes having from 4 to 20, preferably 4 to 12, carbon atoms. Preferred dienes include 1,4-pentadiene, 1,5-hexadiene, 5-vinyl-2-norbornene, 1,7-octadiene, vinyl cyclohexene, dicyclopentadiene, butadiene, isobutylene, isoprene and ethylidene norbornene. Aromatic compounds having vinyl unsaturation such as styrene and substituted styrenes, and polar vinyl monomers such as acrylonitrile, maleic acid esters, vinyl acetate, acrylate esters, methacrylate esters and vinyl trialkyl silanes may be polymerized according to the invention as well. Specific polyolefins that may be made according to the invention include, for example, polyethylene, polypropylene, ethylene/propylene rubbers (EPR's), ethylene/propylene/diene terpolymers (EPDM's), polybutadiene, and polyisoprene.

The present invention is useful with unsupported, liquid form catalyst compositions comprising a single site catalyst precursor and an activating cocatalyst. One or more than one single site catalyst precursor and activating cocatalyst may be employed in the catalyst composition.

As used herein, a single site catalyst precursor is a catalyst precursor that produces, when used with an appropriate activating cocatalyst in gas phase polymerization, a 0.950 density ethylene/1-hexene copolymer having a Crystallizable Chain Length Distribution Index (CCLDI) of less than 12. The Crystallizable Chain Length Distribution Index of a copolymer is determined using Temperature Rising Elution Fractionation (TREF). The analytical TREF method used is similar to that described in Wild et al., J. Polymer Sci., Poly. Phys. Ed., Vol. 20, p. 441 (1982). A dilute solution of the copolymer in a solvent such as 1,2,4-trichlorobenzene, at 1-4 mg/ml, is loaded at high temperature onto a packed column. The column is then allowed to slowly cool down at 0.1°C/min. to ambient temperature in a controlled manner so that the copolymer is crystallized onto the packing in the order of increasing branching (or decreasing crystallinity) with the decreasing temperature. The column is then heated in a controlled manner at 0.7°C/min to above 140°C with a constant solvent flow at 2ml/min through the column. The polymer fractions as they are eluted have decreasing branching (or increasing crystallinity) with the increasing temperature. An infrared concentration detector is used to monitor effluent concentrations. From the TREF temperature data, the branch frequency may be obtained for a given comonomer. Consequently, the main chain lengths between branches, expressed as $L_w$ and $L_n$, may be calculated as follows. $L_w$ is the weight average chain length between branches:

$$L_w=\Sigma_i w_i L_i$$

and $L_n$ is the number average chain length between branches:

$$L_n=1/\Sigma_i(w_i/L_i),$$

wherein wi is the weight fraction of the copolymer component i having an average backbone chain spacing $L_i$ between two adjacent branch points.

The single site catalyst precursor may be a metallocene, i.e., an organometallic coordination complex of one or more π-bonded moieties in association with a metal atom from groups IIIB to VIII or the rare earth metals of the Periodic Table. Bridged and unbridged mono-, di-, and tri-cycloalkadienyl/metal compounds are the most common metallocenes, and generally are of the formula:

$$(L)_y R^1_z (L')MX_{(x-y-1)} \qquad (I)$$

wherein M is a metal from groups IIIB to VIII or a rare earth metal of the Periodic Table; L and L' are the same or different and are π-bonded ligands coordinated to M, preferably cycloalkadienyl groups such as cyclopentadienyl, indenyl, or fluorenyl groups optionally substituted with one or more hydrocarbyl groups containing 1 to 20 carbon atoms; $R^1$ is selected from the group consisting of $C_1$-$C_4$ substituted or unsubstituted alkylene radicals, dialkyl or diaryl germanium or silicon groups, and alkyl or aryl phosphine or amine radicals bridging L and L'; each X is independently hydrogen, an aryl, alkyl, alkenyl, alkylaryl, or arylalkyl radical having 1-20 carbon atoms, a hydrocarboxy radical having 1-20 carbon atoms, y is 0, 1, or 2; x is 1, 2, 3, or 4 depending upon the valence state of M; z is 0 or 1 and is 0 when y is 0; and $x-y \geq 1$.

Illustrative but non-limiting examples of metallocenes represented by formula I are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium methyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl) titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide; the trialkyl metallocenes such as cyclopentadienyl titanium trimethyl, cyclopentadienyl zirconium triphenyl, and cyclopentadienyl zirconium trineopentyl, cyclopentadienyl zirconium trimethyl, cyclopentadienyl hafnium triphenyl, cyclopentadienyl hafnium trineopentyl, and cyclopentadienyl hafnium trimethyl; monocyclopentadienyl titanocenes such as pentamethylcyclopentadienyl titanium trichloride, pentaethylcyclopentadienyl titanium trichloride, bis(pentamethylcyclopentadienyl) titanium diphenyl; the carbene represented by the formula bis(cyclopentadienyl)titanium=CH2 and derivatives of this reagent; substituted bis(cyclopentadienyl)titanium (IV) compounds such as bis(indenyl)titanium diphenyl or dichloride,

bis(methylcyclopentadienyl)titanium diphenyl or dihalides; dialkyl, trialkyl, tetraalkyl and pentaalkyl cyclopentadienyl titanium compounds such as bis(1,2-dimethylcyclopentadienyl)titanium diphenyl or dichloride, bis(1,2-diethylcyclopentadienyl)titanium diphenyl or dichloride; silicon, phosphine, amine or carbon bridged cyclopentadiene complexes such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes, as well as isopropyl(cyclopentadienyl)(fluorenyl)zirconium dichloride, isopropyl(cyclopentadienyl) (octahydrofluorenyl)zirconium dichloride, diphenylmethylene(cyclopentadienyl)(fluorenyl)zirconium dichloride, diisopropylmethylene (cyclopentadienyl)(fluorenyl)zirconium dichloride, diisobutylmethylene(cyclopentadienyl)(fluorenyl)zirconium dichloride, ditertbutylmethylene (cyclopentadienyl)(fluorenyl)zirconium dichloride, cyclohexylidene(cyclopentadienyl)(fluorenyl)zirconium dichloride, diisopropylmethylene (2,5-dimethylcyclopentadienyl)(fluorenyl)-zirconium dichloride, isopropyl(cyclopentadienyl)(fluorenyl)-hafnium dichloride, diphenylmethylene (cyclopentadienyl)-(fluorenyl)hafnium dichloride, diisopropylmethylene-(cyclopentadienyl)(fluorenyl)hafnium dichloride, diisobutylmethylene(cyclopentadienyl)(fluorenyl) hafnium dichloride, ditertbutylmethylene(cyclopentadienyl)-(fluorenyl)hafnium dichloride, cyclohexylidene(cyclopentadienyl)(fluorenyl)hafnium dichloride, diisopropylmethylene(2,5-dimethylcyclopentadienyl)(fluorenyl)hafnium dichloride, isopropyl(cyclopentadienyl)(fluorenyl)titanium dichloride, diphenylmethylene(cyclopentadienyl)(fluorenyl)titanium dichloride, diisopropylmethylene(cyclopentadienyl)-(fluorenyl)titanium dichloride, diisobutylmethylene-(cyclopentadienyl)(fluorenyl)titanium dichloride, ditertbutylmethylene(cyclopentadienyl)(fluorenyl)titanium dichloride, cyclohexylidene(cyclopentadienyl)(fluorenyl)titanium dichloride, diisopropylmethylene(2,5 dimethylcyclopentadienyl)-(fluorenyl) titanium dichloride, racemic-ethylene bis (1-indenyl) zirconium (IV) dichloride, racemic-ethylene bis (4,5,6,7-tetrahydro-1-indenyl) zirconium (IV) dichloride, racemic-dimethylsilyl bis (1-indenyl) zirconium (IV) dichloride, racemic-dimethylsilyl bis (4,5,6,7-tetrahydro-1-indenyl) zirconium (IV) dichloride, racemic-1,1,2,2-tetramethylsilanylene bis (1-indenyl) zirconium (IV) dichloride, racemic-1,1,2,2-tetramethylsilanylene bis (4,5,6,7-tetrahydro-1-indenyl) zirconium (IV), dichloride, ethylidene (1-indenyl tetramethylcyclopentadienyl) zirconium (IV) dichloride, racemic-dimethylsilyl bis (2-methyl-4-t-butyl-1-cyclopentadienyl) zirconium (IV) dichloride, racemic-ethylene bis (1-indenyl) hafnium (IV) dichloride, racemic-ethylene bis (4,5,6,7-tetrahydro-1-indenyl) hafnium (IV) dichloride, racemic-dimethylsilyl bis (1-indenyl) hafnium (IV) dichloride, racemic-dimethylsilyl bis (4,5,6,7-tetrahydro-1- indenyl) hafnium (IV) dichloride, racemic-1,1,2,2- tetramethylsilanylene bis (1-indenyl) hafnium (IV) dichloride, racemic-1,1,2,2-tetramethylsilanylene bis (4,5,6,7-tetrahydro-1- indenyl) hafnium (IV), dichloride, ethylidene (1-indenyl-2,3,4,5- tetramethyl-1-cyclopentadienyl) hafnium (IV) dichloride, racemic- ethylene bis (1-indenyl) titanium (IV) dichloride, racemic-ethylene bis (4,5,6,7-tetrahydro-1-indenyl) titanium (IV) dichloride, racemic- dimethylsilyl bis (1-indenyl) titanium (IV) dichloride, racemic-dimethylsilyl bis (4,5,6,7-tetrahydro-1-indenyl) titanium (IV) dichloride, racemic-1,1,2,2-tetramethylsilanylene bis (1-indenyl) titanium (IV) dichloride racemic-1,1,2,2-tetramethylsilanylene bis (4,5,6,7-tetrahydro-1-indenyl) titanium (IV) dichloride, and ethylidene (1-indenyl-2,3,4,5-tetramethyl-1-cyclopentadienyl) titanium IV) dichloride.

A preferred class of single site catalyst precursors for use in the invention are complexes of transition metals, substituted or unsubstituted pi-bonded ligands, and heteroallyl moieties, such as those described in U.S. Patent No. 5,527,752. Preferably, such complexes have one of the following formulas:

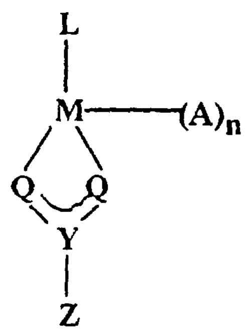

(II)

wherein:

M is a transition metal, preferably Zr or Hf;
L is a substituted or unsubstituted, pi-bonded ligand coordinated to M, preferably a cycloalkadienyl ligand;
each Q is independently selected from the group consisting of -O-, -NR-, $-CR_2-$ and -S-, preferably oxygen;
Y is either C or S, preferably carbon;
Z is selected from the group consisting of -OR, $-NR_2$, $-CR_3$, -SR, $-SiR_3$, $-PR_2$, -H, and substituted or unsubstituted aryl groups, with the proviso that when Q is -NR- then Z is selected from the group consisting of -OR, $-NR_2$, -SR,

$-SiR_3$, $-PR_2$ and -H, preferably Z is selected from the group consisting of -OR, $-CR_3$ and $-NR_2$;
n is 1 or 2;
A is a univalent anionic group when n is 2 or A is a divalent anionic group when n is 1, preferably A is a carbamate, carboxylate, or other heteroallyl moiety described by the Q, Y and Z combination; and
each R is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl, or an aryl group and one or more may be attached to the L substituent;

or

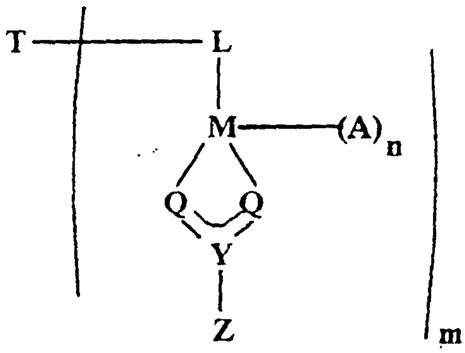

(III)

wherein:

M is a transition metal, preferably Zr or Hf;
L is a substituted or unsubstituted, pi-bonded ligand coordinated to M, preferably a cycloalkadienyl ligand;
each Q is independently selected from the group consisting of -O-, -NR-, $-CR_2$. and -S-, preferably oxygen;
Y is either C or S, preferably carbon;
Z is selected from the group consisting of -OR, $-NR_2$, $-CR_3$, -SR, $-SiR_3$, $-PR_2$, -H, and substituted or unsubstituted aryl groups, with the proviso that when Q is -NR- then Z is selected from the group consisting of -OR, $-NR_2$, -SR, $-SiR_3$, $-PR_2$ and -H, preferably Z is selected from the group consisting of -OR, $-CR_3$ and $-NR_2$;
n is 1 or 2;
A is a univalent anionic group when n is 2 or A is a divalent anionic group when n is 1, preferably A is a carbamate, carboxylate, or other heteroallyl moiety described by the Q, Y and Z combination;
each R is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl, or an aryl group and one or more may be attached to the L substituent;
T is a bridging group selected from the group consisting of alkylene and arylene groups containing from 1 to 10 carbon atoms optionally substituted with carbon or heteroatoms, germanium, silicone and alkyl phosphine; and
m is 2 to 7, preferably 2 to 6, most preferably 2 or 3.

In formulas II and III, the supportive substituent formed by Q, Y and Z is a unicharged polydentate ligand exerting electronic effects due to its high polarizability, similar to the cyclopentadienyl group. In the most preferred embodiments of this invention, the disubstituted carbamates,

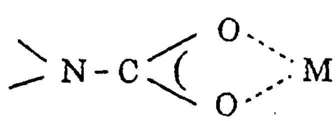

and the carboxylates

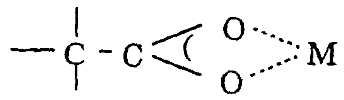

are employed.

Examples of complexes according to formulas II and III include indenyl zirconium tris(diethylcarbamate), indenyl zirconium tris(trimethylacetate), indenyl zirconium tris(p-toluate), indenyl zirconium tris(benzoate), (1-methylindenyl) zirconium tris(trimethylacetate), (2-methylindenyl) zirconium tris(diethylcarbamate), (methylcyclopentadienyl) zirconium tris(trimethylacetate), cyclopentadienyl tris(trimethylacetate), tetrahydroindenyl zirconium tris(trimethylacetate), and (pentamethylcyclopentadienyl) zirconium tris(benzoate). Preferred examples are indenyl zirconium tris(diethylcarbamate), indenyl zirconium tris(trimethylacetate), and (methylcyclopentadienyl) zirconium tris (trimethylacetate).

One method of manufacturing a preferred catalyst precursor, indenyl zirconium tris(diethylcarbamate), is to first react a source of cycloalkadienyl ligand with a metal compound of the formula $M(NR_2)_4$, in which M and R are defined above, to introduce the cycloalkadienyl ligand onto the metal compound. The resulting product is then dissolved in an inert solvent, such as toluene, and the heterocumulene $CO_2$ is contacted with the dissolved product to insert into one or more $M\text{-}NR_2$ bonds to form a carbamate.

Another type of single site catalyst precursor that can be used in accordance with the invention is a constrained geometry catalyst of the formula:

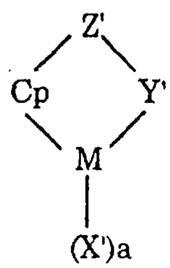

(IV)

wherein:

M is a metal of groups IIIB to VIII of the Periodic Table;
Cp is a cyclopentadienyl or substituted cyclopentadienyl group bound in an $\eta^5$ mode to M;
Z' is a moiety comprising boron, or a member of group IVB of the Periodic Table and optionally sulfur or oxygen, the moiety having up to 20 non-hydrogen atoms, and optionally Cp and Z' together form a fused ring system;
X' is an anionic ligand group or a neutral Lewis base ligand group having up to 30 non-hydrogen atoms;
a is 0, 1, 2, 3 or 4 depending on the valence of M; and
Y' is an anionic or non-anionic ligand group bonded to Z' and M and is nitrogen, phosphorus, oxygen or sulfur having up to 20 non-hydrogen atoms, and optionally Y' and Z' together form a fused ring system.

Constrained geometry catalysts are well known to those skilled in the art and are disclosed in, for example, U.S. Patent Nos. 5,026,798 and 5,055,438 and published European Application No. 0 416 815 A2.

Illustrative but non-limiting examples of substituents Z', Cp, Y', X' and M in formula IV are:

| Z' | Cp | Y' | X' | M |
|---|---|---|---|---|
| dimethylsilyl<br>methylphenylsilyl<br>diphenylsilyl<br>tetramethyl-ethylene | cyclopentadienyl<br>fluorenyl<br>indenyl | t-butylamido<br>phenylamido<br>cyclohexylamido<br>oxo | chloride<br>methyl | titanium<br>zirconium<br>hafnium |

(continued)

| Z' | Cp | Y' | X' | M |
|---|---|---|---|---|
| ethylene<br>diphenylmethylene | tetramethylcyclopentadienyl | | | |

The invention is also useful with a third class of single site catalyst precursors, di(imine) metal complexes, as described in PCT Application No. WO 96/23010. Such di(imine) metal complexes are transition metal complexes of bidentate ligands selected from the group consisting of:

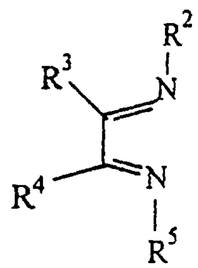

(V)

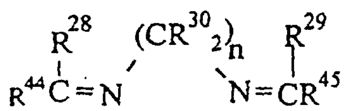

(VI)

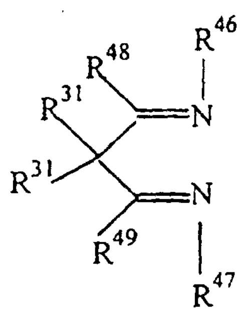

(VII),

and

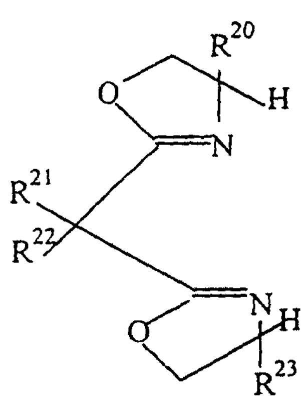

(VIII)

wherein said transition metal is selected from the group consisting of Ti, Zr, Sc, V, Cr, a rare earth metal, Fe, Co,

Ni, and Pd;

$R^2$ and $R^5$ are each independently hydrocarbyl or substituted hydrocarbyl, provided that the carbon atom bound to the imino nitrogen atom has at least two carbon atoms bound to it;

$R^3$ and $R^4$ are each independently hydrogen, hydrocarbyl, substituted hydrocarbyl, or $R^3$ and $R^4$ taken together are hydrocarbylene or substituted hydrocarbylene to form a carbocyclic ring;

$R^{44}$ is hydrocarbyl or substituted hydrocarbyl, and $R^{28}$ is hydrogen, hydrocarbyl or substituted hydrocarbyl or $R^{44}$ and $R^{28}$ taken together form a ring;

$R^{45}$ is hydrocarbyl or substituted hydrocarbyl, and $R^{29}$ is hydrogen, substituted hydrocarbyl or hydrocarbyl, or $R^{45}$ and $R^{29}$ taken together form a ring;

each $R^{30}$ is independently hydrogen, substituted hydrocarbyl or hydrocarbyl, or two of $R^{30}$ taken together form a ring;

each $R^{31}$ is independently hydrogen, hydrocarbyl or substituted hydrocarbyl;

$R^{46}$ and $R^{47}$ are each independently hydrocarbyl or substituted hydrocarbyl, provided that the carbon atom bound to the imino nitrogen atom has at least two carbon atoms bound to it;

$R^{48}$ and $R^{49}$ are each independently hydrogen, hydrocarbyl, or substituted hydrocarbyl;

$R^{20}$ and $R^{23}$ are independently hydrocarbyl or substituted hydrocarbyl;

$R^{21}$ and $R^{22}$ are independently hydrogen, hydrocarbyl or substituted hydrocarbyl; and

n is 2 or 3;

and provided that:

said transition metal also has bonded to it a ligand that may be displaced by or added to the olefin monomer being polymerized; and

when the transition metal is Pd, said bidentate ligand is (V), (VII) or (VIII).

The activating cocatalyst is capable of activating the catalyst precursor. Preferably, the activating cocatalyst is one of the following:

(a) branched or cyclic oligomeric poly(hydrocarbylaluminum oxide)s which contain repeating units of the general formula -(Al(R*)O)-, where R* is hydrogen, an alkyl radical containing from 1 to 12 carbon atoms, or an aryl radical such as a substituted or unsubstituted phenyl or naphthyl group; (b) ionic salts of the general formula $[A^+][BR^{**}{}_4{}^-]$, where $A^+$ is a cationic Lewis or Bronsted acid capable of abstracting an alkyl, halogen, or hydrogen from the metallocene catalysts, B is boron, and R** is a substituted aromatic hydrocarbon, preferably a perfluorophenyl radical; (c) boron alkyls of the general formula $BR^{**}{}_3$, where R** is as defined above; or mixtures thereof. Ionic salts of the general formula $[A^+][BR^{**}{}_4{}^-]$ and boron alkyls can optionally be used with alkylating agents such as alkyl aluminum and alkyl lithium compounds.

More preferably, the activating cocatalyst is a branched or cyclic oligomeric poly(hydrocarbylaluminum oxide) or a boron alkyl. Most preferably, the activating cocatalyst is an aluminoxane such as methylaluminoxane (MAO) or modified methylaluminoxane (MMAO), or a boron alkyl.

Aluminoxanes are well known in the art and comprise oligomeric linear alkyl aluminoxanes represented by the formula:

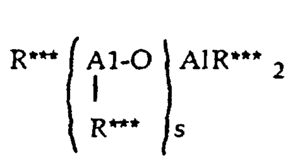

and oligomeric cyclic alkyl aluminoxanes of the formula:

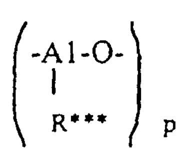

wherein s is 1-40, preferably 10-20; p is 3-40, preferably 3-20; and R*** is an alkyl group containing 1 to 12 carbon atoms, preferably methyl or an aryl radical such as a substituted or unsubstituted phenyl or naphthyl radical. Aluminoxanes may be prepared in a variety of ways well known in the art.

The catalyst composition is in unsupported, liquid form, for example as described in U.S. Patent 5,317,036. The catalyst composition is prepared by contacting outside of the polymerization reactor a single site catalyst precursor that is in the form of a neat liquid, a solution, or a dispersion, with an activating cocatalyst that is also in the form of a neat liquid, a solution, or a dispersion. The resulting unsupported, liquid form catalyst composition is then fed to the polymerization reactor.

The period of time the single site catalyst and the activating cocatalyst are contacted in general varies with the single site catalyst concentration nad additive electrodonicity. Typically, contacting of the single site catalyst precursor and activating cocatalyst takes place for a period of time ranging from 0.001 to 1000 minutes, preferably 0.1 to 100 minutes, more preferably from 1 to 50 minutes.

When the cocatalyst is a branched or cyclic oligomeric poly(hydrocarbylaluminum oxide), the mole ratio of activating cocatalyst (based on aluminum) to single site catalyst precursor (based on the metal) is generally in the range of from 2:1 to 100,000:1, preferably in the range of from 10:1 to 10,000:1, and most preferably in the range of from 50:1 to 2,000:1. When the activating cocatalyst is an ionic salt of the formula $[A^+][BR^{**}_4{}^-]$ or a boron alkyl of the formula $BR^{**}_3$, the mole ratio of activating cocatalyst (based on boron) to single site catalyst precursor (based on the metal) is generally in the range of from 0.5:1 to 10:1, preferably in the range of from 1:1 to 5:1.

The concentration of single site catalyst precursor in the mixture of single site catalyst precursor and activating cocatalyst (which mixture contains the single site catalyst precursor, the activating cocatalyst, and optionally one or more solvents) during contacting ranges from 0.001 to 30 weight percent, preferably 0.01 to 20 weight percent, more preferably 0.10 to 10 weight percent. When the cocatalyst is a branched or cyclic oligomeric poly(hydrocarbylaluminum oxide), the concentration of activating cocatalyst in the mixture of single site catalyst precursor and activating cocatalyst during contacting ranges from 0.03 to 50 weight percent, preferably 0.10 to 30 weight percent, more preferably from 1 to 25 weight percent. When the activating cocatalyst is an ionic salt of the formula $[A^+][BR^{**}_4{}^-]$ or a boron alkyl of the formula $BR^{**}_3$, the concentration of activating cocatalyst in the mixture of single site catalyst precursor and activating cocatalyst during contacting ranges from 0.001 to 30 weight percent, preferably 0.01 to 20 weight percent, more preferably from 0.1 to 10 weight percent.

The temperature during contacting of the single site catalyst precursor and the activating cocatalyst is typically from -20 to 80° C , preferably from 0 to 60° C. The pressure is typically up to 2.1 MPa (300 psi), preferably up to 0.14 MPa (20 psi).

According to the invention, the activity of the unsupported, liquid form catalyst composition may be controlled as desired by adjusting: a) the period of time the single site catalyst precursor and the activating cocatalyst are contacted; b) the concentrations of the single site catalyst precursor and the activating cocatalyst during contacting; c) the mole ratio of the single site catalyst precursor to the activating cocatalyst during contacting; d) the temperature during contacting; and e) the degree of mixing of the catalyst precursor and the activating cocatalyst. One of these factors may be adjusted alone to vary the activity of the catalyst composition. Alternatively, two or more of the factors may be adjusted simultaneously or successively to modify the activity of the catalyst composition. The activity of the catalyst composition may be increased or decreased by adjusting one or more of these factors.

The nature of both the single site catalyst precursor and the activating cocatalyst determine in part the magnitude and direction in which each of the factors should be adjusted in order to achieve a given activity for the catalyst composition. In addition, whether one desires to increase or decrease the activity of the catalyst composition also determines the magnitude and direction in which each of the factors should be adjusted.

In a preferred embodiment of the invention, the activity of an unsupported, liquid form catalyst composition prepared by contacting a single site catalyst precursor of formula II or III above with an aluminoxane activating cocatalyst outside a polymerization reactor is adjusted up or down by at least 20% by performing one of the following during contacting of the single site catalyst precursor of formula II or III with aluminoxane: a) changing the period of time of contacting by at least 50 %, b) changing the concentrations of the single site catalyst precursor and the aluminoxane by at least 30% during contacting, c) changing the mole ratio of aluminoxane to single site catalyst precursor by at least 20% during contacting, or d) changing the temperature 2-10° C during contacting.

In a highly preferred embodiment of the invention, the activity of an unsupported, liquid form catalyst composition prepared by contacting a single site catalyst precursor of formula II or III above with an aluminoxane activating cocatalyst outside a polymerization reactor is changed by at least 50% by changing the period of time of contacting the single site catalyst precursor with the aluminoxane by at least 75%. Most preferably, the activity of an unsupported, liquid form catalyst composition prepared by contacting a single site catalyst precursor of formula II or III above with an aluminoxane activating cocatalyst outside a polymerization reactor is changed by at least 100% by changing the period of time of contacting the single site catalyst precursor with the aluminoxane by at least 100%.

In another embodiment of the invention, the activity of the unsupported, liquid form catalyst composition is

increased by precontacting the single site catalyst precursor with a weakly coordinating electron donor prior to contacting it with the activating cocatalyst. This forms a reaction product between the single site catalyst precursor and the electron donor. Such precontacting typically takes place from 0.01 to 1000 minutes, preferably 0.1 to 100 minutes, more preferably 1 to 50 minutes. Precontacting takes place at temperatures of -20 to 80° C, preferably 0 to 60° C, and pressures of up to 2.1 MPa (300 psi), preferably up to 0.14 MPa (20 psi). Precontacting of the single site catalyst precursor with a weakly coordinating electron donor typically increases the overall activity of the unsupported, liquid form catalyst composition by at least 50%.

Weakly coordinating electron donors are those capable of weakly binding to the metal atom in the single site catalyst precursor but readily displaced under the conditions of the olefin polymerization reaction. It is important that the weakly coordinating electron donor not substantially polymerize under the conditions of precontacting with the single site catalyst precursor or subsequent contacting with the activating cocatalyst. Preferably, the electron donor does not polymerize at all during precontacting or contacting. Examples of weakly coordinating electron donors are olefins and diolefins, such as 1,1-disubstituted olefins and alpha-olefins, including 1-hexene, butene, and isobutylene; amines such as tertiary amines including pyridines; ethers, especially hindered ethers such as methyl t-butyl ether, and phosphines such as trimethylphosphine. Preferably, the electron donor is an olefin or diolefin, most preferably, the electron donor is selected from the group consisting of 1-hexene, butene and isobutylene.

The amount of electron donor required varies with the specific single site catalyst precursor and cocatalyst used. Typically, the mole ratio of electron donor to single site catalyst precursor is from 1:10 to 10,000:1, preferably from 1:2 to 5000:1, most preferably from 1:1 to 1000:1. The electron donor may be neat or dissolved in an appropriate solvent such as isopentane, hexane and toluene.

The following examples further illustrate the invention.

**Preparation of Indenyl Zirconium Tris(trimethylacetate) Solution**

Catalyst precursor was prepared according to the general method described in U.S. Patent No. 5,527,752. A fresh stock catalyst solution (0.05 *M*) was prepared for each set of examples by dissolving 0.257 g of indenyl zirconium tris(trimethylacetate) in 10 mL of hexane.

**Examples 1-8**

In Examples 1-8, a series of unsupported, liquid form catalyst compositions were made by contacting indenyl zirconium tris(trimethylacetate) with modified methylaluminoxane (MMAO as a 1.91 M solution in heptane, 7.2 wt% aluminum, commerically available from Akzo Chemicals, Inc.) for periods of time varying from 2.5 to 30 minutes. The catalyst compositions were used for the copolymerization of ethylene and 1-hexene as follows.

In each Example, in a glove box containing prepurified nitrogen, 0.54 mL of the indenyl zirconium tris(trimethylacetate)solution (27 mmol) as prepared above was placed in a scintillation vial with a stir bar and 3.77 mL of hexane was then added via syringe. 0.69 mL of MMAO solution was then added to the catalyst precursor solution with vigorous stirring. The resulting solution was stirred between 2.5 and 30 minutes at ambient temperature.

During this time, a slurry phase, laboratory scale, stirred autoclave reactor was charged with 600 mL of dry hexane and 43 mL of 1-hexene and was heated to 55 °C under a nitrogen purge. Additional MMAO solution (0.5 mL, 0.95 mmol) was then added to the reactor via syringe to achieve a total reactor Al/ Zr mole ratio of 1000:1 for each polymerization run. After stirring for approximately 10 minutes, the reactor was charged with a 0.19 mL aliquot of the activated catalyst composition solution (1 mmol Zr), and was sealed. pressurized with ethylene 0.60 MPa ((85 p.s.i.)) and brought to 75 °C. Total polymerization time was 30 minutes.

The results in Table 1 below show that the activity of the unsupported, liquid phase, indenyl zirconium tris (trimethylacetate)/MMAO catalyst composition varied with the time of contact between the indenyl zirconium tris(trimethylacetate) and the MMAO. Activities are reported in (grams copolymer)/[(mmol Zr) 0.7 MPa ethylene ((100 psi ethylene)) (hour)].

TABLE 1

| Example | Contact Time (min) | Activity |
|---|---|---|
| 1 | 2.5 | 36941 |
| 2 | 3 | 66353 |
| 3 | 5 | 71059 |
| 4 | 10 | 66353 |
| 5 | 15 | 64706 |

TABLE 1 (continued)

| Example | Contact Time (min) | Activity |
|---|---|---|
| 6 | 20 | 32941 |
| 7 | 25 | 42353 |
| 8 | 30 | 10000 |

**Examples 9-18**

In Examples 9-18, a series of unsupported, liquid form catalyst compositions were made by precontacting indenyl zirconium tris(trimethylacetate) with 1-hexene and then contacting the resulting indenyl zirconium tris(trimethylacetate)/1-hexene reaction product with MMAO for periods of time varying from 3 to 1440 minutes.

Each of the catalyst compositions of Examples 9-18 were made in the same manner as Examples 1-8, except that in each case the indenyl zirconium tris(trimethylacetate) was precontacted with 0.5mL of 1-hexene prior to the addition of only 3.27mL of hexane. The resulting mixture was then contacted with 0.69 mL of the MMAO solution.

The catalyst compositions were used for the copolymerization of ethylene and 1-hexene as described in Examples 1-8. Activities are reported in (grams copolymer)/[(mmol Zr) 0.7MPa ethylene (100 psi ethylene) (hour)].

TABLE 2

| Example | Contact Time (min) | Activity |
|---|---|---|
| 9 | 3 | 27765 |
| 10 | 5 | 51294 |
| 11 | 10 | 76235 |
| 12 | 15 | 85647 |
| 13 | 20 | 83059 |
| 14 | 25 | 67765 |
| 15 | 30 | 81176 |
| 16 | 60 | 69882 |
| 17 | 300 | 36706 |
| 18 | 1440 | 13647 |

The results in Table 2 show that the activity of the unsupported, liquid phase, indenyl zirconium tris(trimethylacetate)/MMAO catalyst composition, wherein the catalyst precursor has been precontacted with 1-hexene, varied with the time of contact between the indenyl zirconium tris(trimethylacetate) and the MMAO.

**Example 19-24**

In Examples 19-24, a series of unsupported, liquid form catalyst compositions were made by precontacting indenyl zirconium tris(trimethylacetate) with 1-hexene, and then contacting with MMAO at varying Al/Zr mole ratios. The catalyst compositions were used for the copolymerization of ethylene and 1-hexene as follows.

The catalyst compositions were prepared in a glove box containing prepurified nitrogen. In each Example, 0.38 mL of indenyl zirconium tris(trimethylacetate) solution (19 mmol) was placed in a scintillation vial with a stir bar and 3.13 mL of hexene was added via syringe. Hexane and the desired amount of MMAO were then added to the stirred solution via syringe with vigorous stirring. The resulting solution was stirred for 30 minutes at ambient temperature.

During this time, a slurry phase, laboratory scale, stirred autoclave reactor was charged with 600 mL of dry hexane and 43 mL of 1-hexene and was heated to 55 °C under a nitrogen purge. Triisobutylaluminum (100 eq) was then added to the reactor via syringe to scavenge impurities. After stirring for approximately 10 minutes, the reactor was charged with a 1.33 mL aliquot of the activated catalyst composition solution (1 mmol Zr), and was sealed, pressurized with ethylene 0.60MPa ((85 p.s.i.)) and brought to 75 °C. Total polymerization time was 30 minutes.

Activities are reported in (grams copolymer)/[(mmol Zr) 0.7MPa ethylene ((100 psi ethylene ))(hour)]. MI is melt index (dg/min), measured using ASTM D-1238 Condition E at 190° C. FI is flow index (dg/min), measured using ASTM D-1238-Condition F. MFR is Melt Flow Ratio, FI/MI. $M_w$ and $M_n$ are Weight Average Molecular Weight and Number Average Molecular Weight, respectively, determined by size exclusion chromatography methods known in the art. PDI is Polydispersity Index, or Molecular Weight Distribution ($M_w/M_n$).

TABLE 3

| Ex. | Al/Zr Mole Ratio | Activity |
|---|---|---|
| 19 | 50 | 32941 |
| 20 | 200 | 39529 |
| 21 | 300 | 56471 |
| 22 | 400 | 59059 |
| 23 | 500 | 95529 |
| 24 | 1000 | 141412 |

The results in Table 3 show that the activity of the unsupported, liquid phase, indenyl zirconium tris(trimethylacetate)/MMAO catalyst composition, wherein the catalyst precursor has been precontacted with 1-hexene, varied with the mole ratio of MMAO (based on Al) to indenyl zirconium tris(trimethylacetate) (based on Zr).

## Claims

**1.** A method of controlling the olefin polymerization activity of an unsupported, liquid form catalyst composition such that the activity of said catalyst composition is changed by at least 20% up or down, the catalyst being prepared by contacting a single site catalyst precursor with an activating cocatalyst outside of a polymerization reactor for a period of time at concentrations, a mole ratio, and a temperature, which method comprising simultaneously performing two or more of changing:

a) the period of time contacting the single site catalyst precursor and the activating cocatalyst by at least 50%;
b) the concentrations of the single site catalyst precursor and the activating cocatalyst by at least 30% during contacting;
c) the mole ratio of the activating cocatalyst to the single site catalyst precursor by at least 20% during contacting; and
d) the temperature by 2-10°C during contacting.

**2.** The method of claim 1, wherein the single site catalyst precursor has the formula:

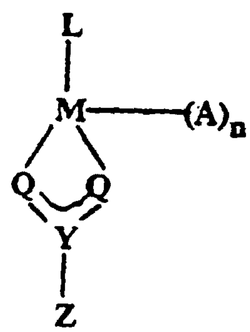

T is a bridging group selected from the group consisting of alkylene and arylene groups containing from 1 to 10 carbon atoms optionally substituted with carbon or heteroatoms, germanium, silicone and alkyl phosphine; and

m is 2 to 7.

**3.** The method of claim 2, wherein the single site catalyst is selected from the group consisting of indenyl zirconium tris(diethylcarbamate), indenyl zirconium tris(trimethylacetate), and (methylcyclopentadienyl) zirconium tris(trimethylacetate).

**4.** A process for the production of an olefin polymer, which comprises:

(i) preparing an unsupported liquid form catalyst composition by contacting a single site catalyst precursor with an activating cocatalyst outside of a polymerization reactor for a period of time at concentrations, a mole ratio, and a temperature, wherein the activity of the catalyst composition is changed by at least 20% up or down by simultaneously performing two or more of changing:

a) the period of time of contacting the single site catalyst precursor and the activating cocatalyst by at least 50%;
b) the concentrations of the single site catalyst precursor and the activating cocatalyst by at least 30% during contacting;
c) the mole ratio of the single site catalyst precursor to the activating cocatalyst by at least 20% during contacting; and
d) the temperature by 2-10°C during. contacting, and

(ii) contacting at least one olefin monomer under polymerisation condition with said unsupported liquid form catalyst composition.

**5.** The process of claim 4, wherein the single site catalyst has the formula:

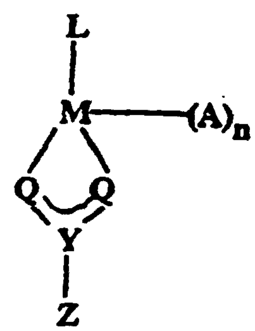

or

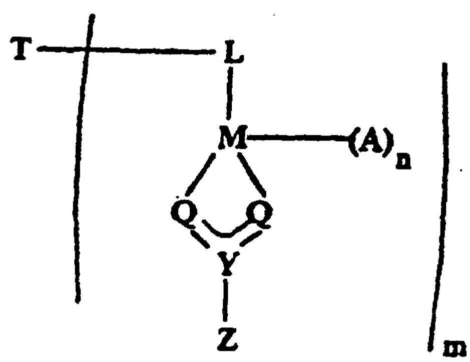

wherein:

M is a transition metal;
L is a substituted or unsubstituted, pi-bonded ligand coordinated to M;
each Q is independently selected from the group consisting of -O-, -NR-, $CR_2$- and -S-;
Y is C or S;
Z is selected from the group consisting of -OR, $-NR_2$, $-CR_3$, -SR, $-SiR_3$, $-PR_2$, -H, and substituted or unsubstituted aryl groups, with the proviso that when Q is -NR- then Z is selected from the group consisting of -OR, $-NR_2$, -SR, $-SiR_3$, $-PR_2$ and -H;
n is 1 or 2;
A is a univalent anionic group when n is 2 or A is a divalent anionic group when n is 1;
each R is independently a group containing carbon, silicon, nitrogen, oxygen, and/or phosphorus where one

or more R groups may be attached to the L substituent;
T is a bridging group selected from the group consisting of alkylene and arylene groups containing from 1 to 10 carbon atoms optionally substituted with carbon or heteroatoms, germanium, silicone and alkyl phosphine; and
m is 2 to 7.

6. The process of claim 5, wherein the single site catalyst is selected from the group consisting of indenyl zirconium tris(diethylcarbamate), indenyl zirconium tris(trimethylacetate), and (methylcyclopentadienyl) zirconium tris(trimethylacetate).

7. The process of claim 4, wherein the olefin polymer is an ethylene polymer.

8. The process of claim 4, wherein polymerization is conducted in the gas phase.

**Patentansprüche**

1. Verfahren zum Steuern/Regeln der Olefinpolymerisationaktivität einer ungeträgerten Katalysatorzusammensetzung in flüssiger Form, so dass die Aktivität der Katalysatorzusammensetzung um mindestens 20 % nach oben oder unten verändert wird, wobei der Katalysator hergestellt wird durch In-Kontakt-Bringen eines Einstellenkatalysatorvorläufers mit einem aktivierenden Cokatalysator außerhalb eines Polymerisationsreaktors für eine Zeitdauer bei Konzentrationen, einem Molverhältnis und einer Temperatur, wobei das Verfahren das gleichzeitige Durchführen von zwei oder mehr Veränderungen umfasst:

   a) der Zeitdauer des Kontaktierens des Einstellenkatalysatorvorläufers und des aktivierenden Cokatalysators um mindestens 50 %;
   b) der Konzentrationen des Einstellenkatalysatorvorläufers und des aktivierenden Cokatalysators um mindestens 30 % während des Kontaktierens;
   c) des Mol-Verhältnisses des aktivierenden Cokatalysators zum Einstellenkatalysatovorläufer um mindestens 20 % während des Kontaktierens; und
   d) der Temperatur um 2-10°C während des Kontaktierens.

2. Verfahren nach Anspruch 1, worin der Einstellenkatalysatorvorläufer die Formel:

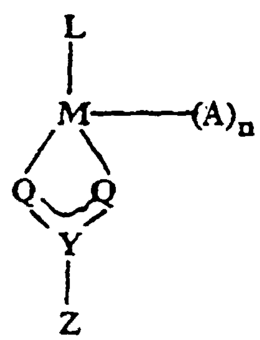

aufweist,
T eine verbrückende Gruppe ist, ausgewählt aus der Gruppe, bestehend aus Alkylen- und Arylen-Gruppen, die von 1 bis 10 Kohlenstoffatome enthalten, welche optional substituiert sind mit Kohlenstoff- oder Heteroatomen, Germanium, Silikon und Alkylphosphin; und
m 2 oder 7 ist.

3. Verfahren nach Anspruch 2, worin der Einstellenkatalysator ausgewählt wird aus der Gruppe, bestehend aus Indenyl-zirkonium-tris(diethylcarbamat), Indenylzirkonium-tris(trimethylacetat) und (Methylcyclopentadienyl)zirkoniumtris(trimethylacetat).

4. Verfahren zur Herstellung eines Olefinpolymers, umfassend:

(i) Herstellen einer ungeträgerten Katalysatorzusammensetzung in flüssiger Form durch In-Kontakt-bringen eines Einstellenkatalysatorvorläufers mit einem aktivierenden Cokatlaysator außerhalb eines Polymerisationsreaktors für eine Zeitdauer bei Konzentrationen, einem Molverhältnis und einer Temperatur, worin die Aktivität der Katalysatorzusammensetzung um mindestens 20% nach oben oder unten verändert wird durch gleichzeitiges Durchführen von zwei oder mehr Veränderungen:

a) der Zeitdauer des Kontaktierens des Einstellenkatalysatorvorläufers und des aktivierenden Cokatalysators um mindestens 50 %;
b) der Konzentrationen des Einstellenkatalysatorvorläufers und des aktivierenden Cokatalysators um mindestens 30 % während des Kontaktierens; und
c) des Mol-Verhältnisses des Einstellenkatalysatorvorläufers zum aktivierenden Cokatalysator um mindestens 20 % während des Kontaktierens;
d) der Temperatur um 2-10°C während des Kontaktierens und

(ii) In-Kontakt-Bringen mindestens eines Olefinmonomers unter Polymerisationsbedingung mit der ungeträgerten Katalysatorzusammensetzung in flüssiger Form.

**5.** Verfahren nach Anspruch 4, worin der Einstellenkatalysator die Formel:

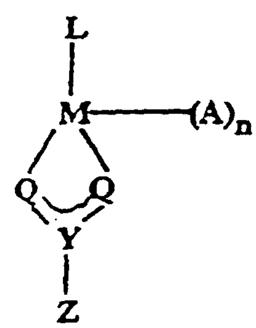

oder

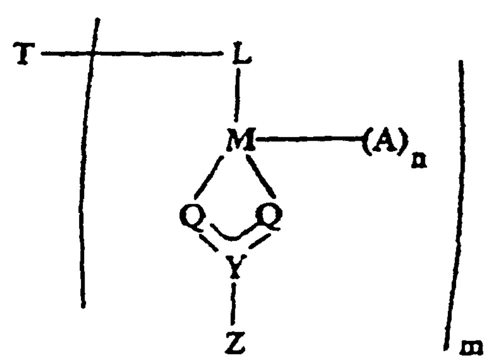

aufweist, worin:

M ein Übergangsmetall ist;
L ein substituierter oder unsubstituierter pi-gebundener Ligand ist, der an M koordiniert ist;
jedes Q unabhängig ausgewählt ist aus der Gruppe, bestehend aus -O-, -NR-, $-CR_2-$ und -S-;
Y C oder S ist;
Z ausgewählt ist aus der Gruppe, bestehend aus -OR, $-NR_2$, $-CR_3$, -SR, $-SiR_3$, $-PR_2$, -H und substituierten oder unsubstituierten Arylgruppen, mit der Maßgabe, dass wenn Q -NR- ist, Z ausgewählt wird aus der Gruppe, bestehend aus -OR, $-NR_2$, -SR, $-SiR_3$, $-PR_2$ und -H;
n 1 oder 2 ist;

A eine univalente anionische Gruppe ist wenn n 2 ist oder A eine divalente anionische Gruppe ist wenn n 1 ist;
jedes r unabhängig eine Gruppe ist, die Kohlenstoff, Silicium, Stickstoff, Sauerstoff und/oder Phosphor enthält, worin eine oder mehrere R-Gruppen an den L-Substituenten gebunden sein können;
T eine verbrückende Gruppe ist, ausgewählt aus der Gruppe, bestehend aus Alkylen- und Arylen-Gruppen, die von 1 bis 10 Kohlenstoffatome enthalten, die optional substituiert sind mit Kohlenstoffoder Heteroatomen, Germanium, Silikon und Alkylphosphin; und
m 2 bis 7 ist:

**6.** Verfahren nach Anspruch 5, worin der Einstellenkatalysator ausgewählt wird aus der Gruppe, bestehend aus Indenyl-zirkonium-tris(diethylcarbamat), Indenylzirkonium-tris(trimethylacetat) und (Methylcyclopentadienyl)zirkoniumtris(trimethylacetat).

**7.** Verfahren nach Anspruch 4, worin das Olefinpolymer ein Ethylenpolymer ist.

**8.** Verfahren nach Anspruch 4, worin die Polymerisation in der Gasphase durchgeführt wird.

## Revendications

**1.** Procédé de réglage de l'activité pour la polymérisation des oléfines d'une composition catalytique sous forme liquide, non-fixée sur un support, de telle manière que l'activité de ladite composition catalytique soit modifiée d'au moins 20 % en plus ou en moins, le catalyseur étant préparé par mise en contact d'un précurseur de catalyseur à site unique avec un cocatalyseur activant, à l'extérieur d'un réacteur de polymérisation, pendant une certaine durée, dans certaines conditions de concentrations, de rapport molaire et de température, procédé qui comprend la réalisation simultanée de deux ou plus de deux des modifications suivantes :

a) la durée de mise en contact du précurseur de catalyseur à site unique et du cocatalyseur activant est modifiée d'au moins 50 %,
b) les concentrations du précurseur de catalyseur à site unique et du cocatalyseur activant sont modifiées d'au moins 30 % lors de la mise en contact,
c) le rapport molaire du cocatalyseur activant au précurseur de catalyseur à site unique est modifié d'au moins 20 % lors de la mise en contact, et
d) la température est modifiée de 2 à 10 °C lors de la mise en contact.

**2.** Procédé selon la revendication 1, dans lequel le précurseur de catalyseur à site unique est un composé de formule :

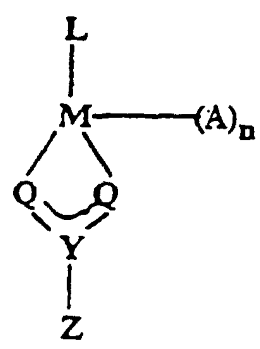

ou :

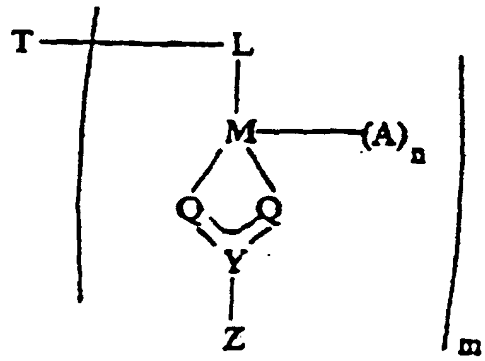

dans laquelle :

M représente un métal de transition,
L représente un ligand à liaisons pi, substitué ou non-substitué, lié par coordination à M,
chaque Q représente indépendamment -O-, -NR-, $-CR_2-$ ou -S-,
Y représente C ou S,
Z représente -OR, $-NR_2$, $-CR_3$, -SR, $-SiR_3$, $-PR_2$, -H, ou un groupe aryle substitué ou non-substitué, étant entendu que, lorsque Q représente -NR-, Z représente -OR, $-NR_2$, -SR, $-SiR_3$, $-PR_2$ ou -H,
n est égal à 1 ou 2,
A représente un groupe anionique monovalent lorsque n est égal à 2, ou un groupe anionique divalent lorsque n est égal à 1,
chaque R représente indépendamment un groupe contenant du carbone, du silicium, de l'azote, de l'oxygène et/ou du phosphore, et un ou plusieurs groupes R peuvent être liés au substituant L,
T représente un groupe formant un pont, choisi parmi les groupes alkylène et arylène contenant 1 à 10 atomes de carbone, éventuellement substitués par du carbone ou des hétéroatomes, le germanium, le silicium et les alkylphosphines, et
m représente un nombre de 2 à 7.

**3.** Procédé selon la revendication 2, dans lequel le précurseur de catalyseur à site unique est un composé choisi parmi le tris(diéthylcarbamate) d'indénylzirconium, le tris(triméthylacétate) d'indénylzirconium et le tris(triméthylacétate) de (méthylcyclopentadiényl)zirconium.

**4.** Procédé de production d'un polymère d'oléfine, qui comprend :

(i) la préparation d'une composition catalytique sous forme liquide, non-fixée sur un support, par mise en contact d'un précurseur de catalyseur à site unique avec un cocatalyseur activant, à l'extérieur d'un réacteur de polymérisation, pendant une certaine durée, dans certaines conditions de concentrations, de rapport molaire et de température, l'activité de la composition catalytique étant modifiée d'au moins 20 % en plus ou en moins par la réalisation simultanée de deux ou plus de deux des modifications suivantes :

a) la durée de mise en contact du précurseur de catalyseur à site unique et du cocatalyseur activant est modifiée d'au moins 50 %,
b) les concentrations du précurseur de catalyseur à site unique et du cocatalyseur activant sont modifiées d'au moins 30 % lors de la mise en contact,
c) le rapport molaire du cocatalyseur activant au précurseur de catalyseur à site unique est modifié d'au moins 20 % lors de la mise en contact, et
d) la température est modifiée de 2 à 10 °C lors de la mise en contact, et

(ii) la mise en contact d'au moins un monomère oléfinique, dans des conditions de polymérisation, avec ladite composition catalytique sous forme liquide, non-fixée sur un support.

**5.** Procédé selon la revendication 4, dans lequel le précurseur de catalyseur à site unique est un composé de formule :

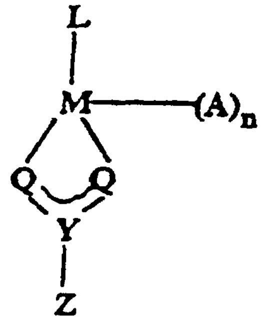

ou :

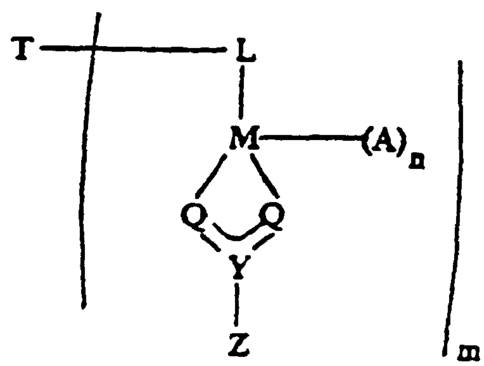

dans laquelle :

M représente un métal de transition,
L représente un ligand à liaisons pi, substitué ou non-substitué, lié par coordination à M,
chaque Q représente indépendamment -O-, -NR-, $-CR_2-$ ou -S-,
Y représente C ou S,
Z représente -OR, $-NR_2$, $-CR_3$, -SR, $-SiR_3$, $-PR_2$, -H, ou un groupe aryle substitué ou non-substitué, étant entendu que, lorsque Q représente -NR-, Z représente -OR, $-NR_2$, -SR, $-SiR_3$, $-PR_2$ ou -H,
n est égal à 1 ou 2,
A représente un groupe anionique monovalent lorsque n est égal à 2, ou un groupe anionique divalent lorsque n est égal à 1,
chaque R représente indépendamment un groupe contenant du carbone, du silicium, de l'azote, de l'oxygène et/ou du phosphore, et un ou plusieurs groupes R peuvent être liés au substituant L,
T représente un groupe formant un pont, choisi parmi les groupes alkylène et arylène contenant 1 à 10 atomes de carbone, éventuellement substitués par du carbone ou des hétéroatomes, le germanium, le silicium et les alkylphosphines, et
m représente un nombre de 2 à 7.

**6.** Procédé selon la revendication 5, dans lequel le précurseur de catalyseur à site unique est choisi parmi le tris(diéthylcarbamate) d'indénylzirconium, le tris(triméthylacétate) d'indénylzirconium et le tris(triméthylacétate) de (méthylcyclopentadiényl)zirconium.

**7.** Procédé selon la revendication 4, dans lequel le polymère d'oléfine est un polymère d'éthylène.

**8.** Procédé selon la revendication 4, dans lequel on réalise la polymérisation en phase gazeuse.